(19) **Europäisches Patentamt**

**European Patent Office**

**Office européen des brevets**

(11) **EP 1 624 414 A1**

(12) **EUROPÄISCHE PATENTANMELDUNG**

(43) Veröffentlichungstag:
**08.02.2006 Patentblatt 2006/06**

(51) Int Cl.:
***G06T 7/20*** *(2006.01)*

(21) Anmeldenummer: **04018276.8**

(22) Anmeldetag: **02.08.2004**

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL HR LT LV MK**

(71) Anmelder: **SIEMENS AKTIENGESELLSCHAFT 80333 München (DE)**

(72) Erfinder:
• **Jamwal Ankit
  81373 München (DE)**
• **St John, Ben
  81735 München (DE)**

(54) **Verfahren und Vorrichtung zur Positionsbestimmung einer Kamera**

(57) Die vorliegende Erfindung betrifft ein Verfahren zur Positionsbestimmung einer Kamera. Dabei werden bei einer Kamerabewegung Teilbildbereiche in zeitlich aufeinander folgenden Kamerabildern einer Bildfolge festgelegt und aus zumindest zwei Bewegungsvektoren, die anhand der Teilbildbereiche bestimmt werden, wird eine Zoombewegung und/oder eine Translationsbewegung und/oder eine Drehbewegung der Kamera ermittelt. Zusätzlich wird eine Beschleunigung der Kamerabewegung ermittelt. Ausgehend von einem vorbestimmten Positions-Referenzpunkt wird die Zoombewegung und/oder die Translationsbewegung und/oder die Drehbewegung der Kamera unter Berücksichtigung der Beschleunigung in eine Positionsänderung der Kamera umgesetzt, um eine aktuelle Kameraposition zu bestimmen.

FIG 7

**Beschreibung**

Die vorliegende Erfindung betrifft ein Verfahren zur Positionsbestimmung einer Kamera.

Es sind Verfahren zur Positionsbestimmung von Fahrzeugen bekannt, bei denen ausgehend von einem vorbestimmten Referenzpunkt durch Analyse von Fahrzeugbewegungen eine aktuelle Fahrzeugposition bestimmt und auf einer Straßenkarte unter Verwendung eines Displays angezeigt wird. Dabei werden beispielsweise Radumdrehungen in der Anzahl erfasst und in eine zurückgelegte Wegstrecke umgesetzt. Weiter werden Lenkwinkel gemessen, die bei einem Überschreiten eines vorgegebenen Werts als ein Abbiegen des Fahrzeugs gewertet werden. Anhand der im Fahrzeug gespeicherten Straßenkarte wird die Fahrzeugposition ständig aktualisiert und auf dem Display angezeigt. Bei derartigen Verfahren können zusätzlich GPS-Koordinaten verwendet werden, jedoch ist dies nicht zwingend notwendig.

Ein derartiges Verfahren, bei dem aufgrund eines beobachteten -Verhaltens eine aktuelle Position ermittelt wird, wird als "Dead Reckoning"-Verfahren bezeichnet.

Unter dem Begriff "Augmented-Reality-Applikationen" sind Anwendungen bekannt, bei denen in einem Kamerabild, das eine reale Umgebung zeigt, virtuelle Informationen oder dreidimensionale virtuelle Objekte zusätzlich eingeblendet werden. Einem Anwender werden die überlagerten virtuellen Informationen bzw. Objekte als Teil des realen Kamerabildes an zugeordneten Positionen angezeigt.

Erfolgt bei diesen Anwendungen eine Kamerabewegung linear in Richtung eines Zielortes, der durch ein aktuelles Kamerabild festgelegt ist, so kann diese Kamerabewegung in eine Annäherung des virtuellen Objekts zum Zielort umgesetzt werden. Eine derartige Bewegung wird als Zoombewegung bezeichnet. Dabei wird gegebenenfalls die Größe des virtuellen Objekts in Abhängigkeit des Abstandes zwischen Kamera bzw. zugeordnetem Kamerabezugspunkt einerseits und dem Zielort andererseits verändert - in Abhängigkeit von der zurückgelegten Weglänge, um die der Kamerabezugspunkt zum Zielort bewegt wurde.

Eine Drehbewegung der Kamera bzw. des Kamerabezugspunkts um eine vorgegebene Achse kann in eine zugeordnete Drehung des virtuellen Objekts umgesetzt werden. Eine Translationsbewegung der Kamera in einer Ebene, die durch einen Abstand zum Zielort bestimmt ist, kann in eine zugeordnete xy-Verschiebung des virtuellen Objekts innerhalb der Ebene umgesetzt werden.

Ein mögliches Verfahren zur Bestimmung der oben genannten Kamerabewegungen ist beispielsweise aus der am 23.06.2004 eingereichten europäischen Patentanmeldung mit dem Aktenzeichen EP 04 014 760.5 bekannt. Bei diesem Verfahren werden aufeinanderfolgende Kamerabilder unter Verwendung von Teilbildbereichen analysiert und daraus Bewegungsparameter und Bewegungsvektoren abgeleitet, die die Translationsbewegung, die Rotationsbewegung und die Zoombewegung der Kamera bestimmen.

Es ist Aufgabe der vorliegenden Erfindung, ein Verfahren und eine Vorrichtung anzugeben, mit denen eine Kameraposition mit geringem Aufwand schnell und genau bestimmt werden kann.

Diese Aufgabe wird durch die Merkmale des Patentanspruchs 1 und des Patentanspruchs 10 gelöst. Vorteilhafte Weiterbildungen sind in Unteransprüchen angegeben.

Bei der vorliegenden Erfindung werden bei einer Kamerabewegung zeitlich aufeinander folgende Kamerabilder analysiert.

Beispielsweise werden den Kamerabildern zugeordnete Teilbildbereiche analysiert und eine Translationsbewegung und/oder eine Rotationsbewegung und/oder eine Zoombewegung der Kamera bestimmt.

Alternativ dazu ist eine Analyse von vorbekannten Markern in aufeinander folgenden Kamerabildern möglich, wobei die Marker vorzugsweise ein vorbestimmtes Muster oder Textur aufweisen. Die relative Ortsveränderung der Marker in den aufeinanderfolgenden Kamerabildern erlaubt eine Aussage über die durchgeführte Kamerabewegung. Dabei ist es auch möglich, einen Marker als Kamerabezugspunkt oder als Zielpunkt zu verwenden.

Zusätzlich wird eine Beschleunigung bestimmt, mit der die Kamera bewegt wird. Diese Beschleunigung wird bei der Bestimmung der Kameraposition zusätzlich berücksichtigt.

Beispielsweise kann die gemessene Beschleunigung zur Bestimmung einer Neigungsbewegung bzw. zur Bestimmung einer Kippbewegung der Kamera verwendet werden. Weiter ist es möglich, bei einer durchgeführten Zoombewegung den zurückgelegten Weg anhand der gemessenen Beschleunigung mit erhöhter Genauigkeit zu ermitteln.

Anhand der Bestimmung und Auswertung der Drehung der Kamera, der Zoombewegung, der Translationsbewegung, der Neigungsbewegung bzw. der Kippbewegung und der Beschleunigung der Kamera ist es möglich, ausgehend von einem vorgegebenen räumlichen Bezugspunkt eine aktuelle Kameraposition zu bestimmen bzw. deren absolute oder relative Positionsänderung zu bestimmen.

Der Bezugspunkt wird dabei beispielsweise manuell eingegeben bzw. eingestellt. Zusätzlich ist eine Verwendung von GPS-Koordinaten zur Festlegung des Bezugspunkts möglich.

Die Kamera verfügt über ein Display, auf dem beispielsweise anhand einer abgespeicherten Straßenkarte die Kameraposition laufend aktualisiert dargestellt wird.

Das erfindungsgemäße Verfahren bestimmt relative Postionsänderungen der Kamera zum Bezugspunkt, so dass eine Verwendung jeglicher Art von Karten nicht zwingend notwendig ist.

Mit Hilfe des erfindungsgemäßen Verfahrens ist es auch möglich, eine Lage bzw. Position und eine Ausrichtung eines virtuellen Objekts in Bezug zu einem vorgegebenen Zielort, der durch ein Kamerabild bestimmt wird, festzustellen. Dazu wird beispielsweise die Kamerabewegung bzw. deren Positionsänderung auf das virtuelle Objekt derart übertragen, dass das virtuelle Objekt im Kamerabild die Bewegung der Kamera nachvollzieht.

Dadurch ist es beispielsweise möglich, festzustellen, ob das einem realen Objekt entsprechende virtuelle Objekt am vorgegebenen Zielort positioniert werden kann oder nicht.

Beispielsweise ist es auch möglich, ein neuartiges modelliertes Automodell als virtuelles Objekt bezogen auf einen Kamerabezugspunkt anzuzeigen. Bewegt sich dann ein Kamerabenutzer um den vorgegebenen Bezugspunkt, wird ihm die jeweilige Automodellansicht entsprechend seiner Bewegung angezeigt. Wird als Bezugspunkt beispielsweise eine Tischfläche gewählt, so kann der Kamerabenutzer das virtuelle Automodell bei der Umrundung der Tischfläche derart auf dem Display betrachten, als wäre es real auf der Tischfläche angeordnet.

Das erfindungsgemäße Verfahren ist insbesondere für automatisierte Roboteranwendungen interessant, bei denen ein Roboter seine Position unter Verwendung einer Kamera bestimmen will.

Andererseits ist das erfindungsgemäße Verfahren auch für einen Servicetechniker anwendbar, der beispielsweise vor Ort prüfen will, ob ein zu bestellendes Bauteil in eine vorgegebene Schaltungsanordnung passt oder nicht.

Das erfindungsgemäße Verfahren ist aufgrund seiner Einfachheit besonders vorteilhaft in einem Datenverarbeitungsgerät, Funkkommunikationsendgerät bzw. in so genannten "Personal Digital Assistant, PDA" einsetzbar, die über eine Kamera verfügen.

Vorteilhafterweise wird bei der vorliegenden Erfindung die Translationsbewegung, die Rotationsbewegung und die Zoombewegung der Kamera unter Verwendung des Verfahrens bestimmt, das aus der am 23.06.2004 eingereichten europäischen Patentanmeldung mit dem Aktenzeichen EP 04 014 760.5 bekannt ist.

Dabei wird eine optische Achse vorausgesetzt, die einerseits durch einen Kamerabezugspunkt, d.h. durch eine verwendete Aufnahmeeinheit der Kamera, und andererseits durch den Mittelpunkt des jeweils aufgenommenen Kamerabildes festgelegt ist. Dieser Mittelpunkt wird als Koordinatensystem-Ursprung verwendet.

Zur Beschleunigungsmessung wird beispielsweise ein Beschleunigungsmesser verwendet, der als integrierte Baugruppe mit minimalen Abmessungen sehr preisgünstig im Handel erhältlich und somit nur mit geringem zusätzlichen Aufwand in der Kamera bzw. im verwendeten Endgerät integrierbar ist.

Für zumindest zwei Teilbildbereiche, die zeitlich aufeinanderfolgenden Kamerabildern einer Bildfolge zugeordnet sind, werden zugehörige Bewegungsvektoren ermittelt. Diese Ermittlung erfolgt beispielsweise anhand der bekannten Verfahren "motion estimation" und "pixel flow", die beispielsweise in Videokameras verwendet werden.

Beispielsweise kann zur Ermittlung der Bewegungsvektoren eine Positionsabweichung eines unverschobenen Teilbildbereichs zu einer Position eines verschobenen Teilbildbereichs in zeitlich aufeinander folgenden Kamerabildern ermittelt werden.

Ein Teilbildbereich stellt hierbei einen kleinen Teil bzw. einen Ausschnitt eines so genannten Suchbildbereichs eines aufgenommenen Kamerabildes dar. Innerhalb des Suchbildbereichs wird eine Übereinstimmung der Teilbildbereiche für zwei aufeinander folgende Kamerabilder durchgeführt und daraus unmittelbar der Bewegungsvektor ermittelt.

Anschließend werden Bewegungsvektor-Ortskoordinaten ermittelt, die den Bewegungsvektoren zugeordnet sind, wobei ein zugeordnetes Ortskoordinatensystem seinen Ursprung in einem Punkt besitzt, der auf der der optischen Achse liegt.

Auf Grundlage der Bewegungsvektoren und der zugehörigen Bewegungsvektor-Ortskoordinaten werden anschließend Bewegungsparameter der Kamerabilder für die Translations-, die Dreh- bzw. für die Zoombewegung oder für kombinierte Kamerabewegungen ermittelt.

Das beschriebene Verfahren wird als Teilaspekt der Erfindung hinsichtlich der Translationsbewegung, der Rotationsbewegung und der Zoombewegung nachfolgend anhand einer Zeichnung näher erläutert. Dabei zeigt:

FIG 1 eine vereinfachte Darstellung eines Kamerabilds mit Bewegungsvektoren einer Translation,

Fig 2 eine vereinfachte Darstellung eines Kamerabilds mit Bewegungsvektoren einer Rotation,

FIG 3 eine vereinfachte Darstellung eines Kamerabilds mit Bewegungsvektoren einer Zoombewegung,

FIG 4 eine vereinfachte Darstellung eines Kamerabilds mit Bewegungsvektoren einer kombinierten Rotation und Translation,

FIG 5 eine vereinfachte Darstellung eines Kamerabilds mit Bewegungsvektoren einer Rotation, wobei eine Rotationsachse außerhalb einer optischen Achse der Aufnahmeeinheit liegt,

FIG 6 eine vereinfachte Darstellung eines Kamerabilds mit zugehörigen Teilbildbereichen und Bewegungsvektoren sowie zugehörigen Lösungsmatrizen, und

FIG 7 eine vereinfachte Blockdarstellung der erfindungsgemäßen Vorrichtung.

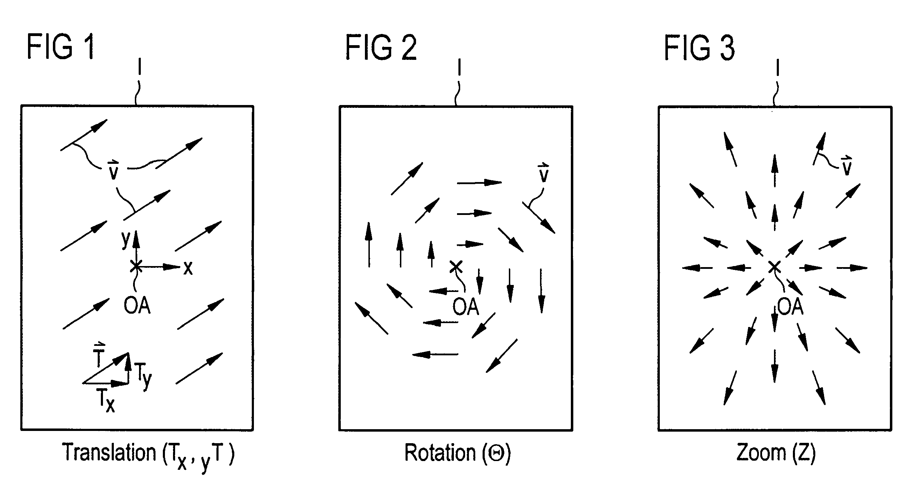

FIG 1 zeigt eine vereinfachte Darstellung eines Kamerabilds I mit einer Vielzahl von Bewegungsvektoren v einer Translation.

Dabei wurde beispielsweise eine Aufnahmeeinheit bzw. eine Kamera in einem Winkel von ca. 45° schräg nach links unten bewegt, wodurch die in umgekehrter Richtung dargestellten Bewegungsvektoren v wie vorstehend beschrieben ermittelt werden.

Mit OA ist hierbei ein Mittelpunkt des Kamerabilds I bezeichnet, der mit der optischen Achse der Aufnahmeeinheit bzw. Kamera, die die Kamerabilder I erzeugt, übereinstimmt. Zur genauen Beschreibung der Positionen der verschiedenen Bewegungsvektoren wird ein x-/y-Koordinatensystem eingeführt, dessen Ursprung mit dem Mittelpunkt bzw. mit der optischen Achse OA übereinstimmt. Somit können die Bewegungsvektoren v als reine Translationsvektoren T in ihre zugehörige x-Translation $T_X$ zur Quantifizierung einer Verschiebebewegung in x-Richtung und eine y-Translation $T_y$ zur Quantifizierung einer Verschiebebewegung in y-Richtung zerlegt werden.

FIG 2 zeigt eine vereinfachte Darstellung eines Kamerabilds I mit Bewegungsvektoren v einer Rotation.

Dabei sind die entstehenden Bewegungsvektoren v im wesentlichen kreisförmig um die optische Achse OA bzw. um den Ursprung des (Orts-) Koordinatensystems angeordnet, wobei ihre Länge im wesentlichen von einem Abstand zum Ursprung des Koordinatensystems abhängt. Die Ermittlung einer Rotation ist komplex, weil zusätzlich zur Länge der Bewegungsvektoren auch eine Richtung der jeweiligen Bewegungsvektoren, die von einer jeweiligen x- und y-Koordinate im Koordinatensystem abhängig ist, zu ermitteln ist.

FIG 3 zeigt eine vereinfachte Darstellung eines Kamerabilds I mit Bewegungsvektoren v einer Zoombewegung.

Die Zoombewegung entsteht beispielsweise durch ein Heranführen oder durch ein Entfernen der Aufnahmeeinheit an das aufgenommene Objekt. Die ermittelten Bewegungsvektoren v sind hierbei sternförmig um den Mittelpunkt des Kamerabildes bzw. um den Ursprung des Koordinatensystems oder der optischen Achse OA angeordnet. Hier ist eine Zoombewegung dargestellt, die durch ein Heranführen der Kamera zum aufgenommenen Objekt entsteht, weshalb die Bewegungsvektoren v vom Ursprung OA nach außen zeigen und für einen kleinen Abstand vom Ursprung kleine Längen bzw. Beträge aufweisen, während Bewegungsvektoren mit großem Abstand zum Ursprung größere Längen bzw. Beträge aufweisen.

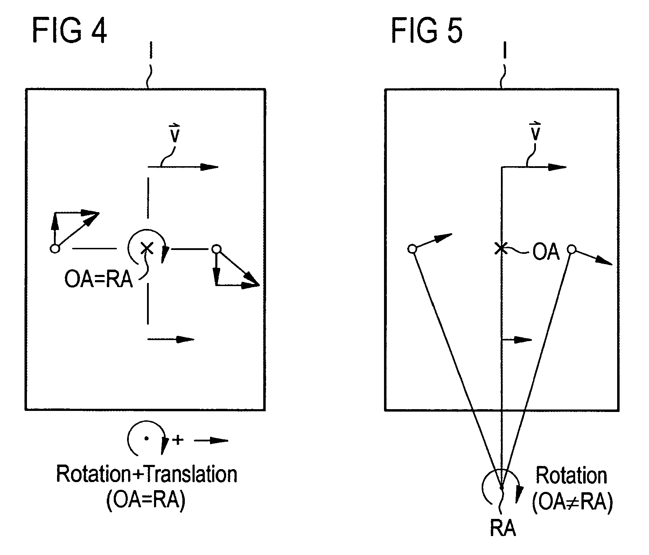

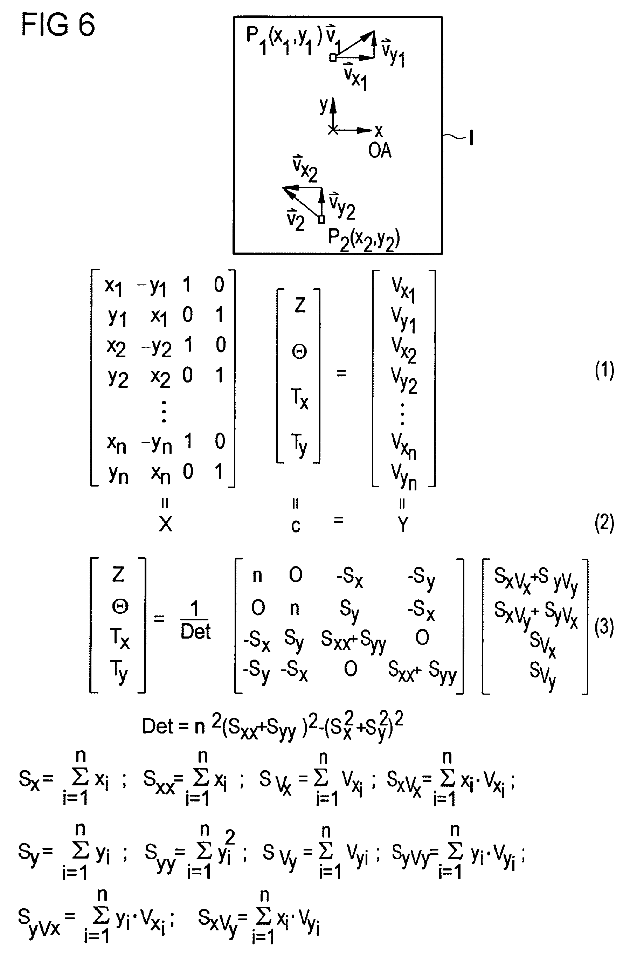

Die Figuren FIG 4 und FIG 5 zeigen kombinierte Bewegungsarten, wobei in Figur FIG 4 beispielsweise eine Rotation in Kombination mit einer Translation in x-Richtung betrachtet wird.

Bei einer derartigen komplexen Bewegung verlängern sich in der oberen Hälfte des Kamerabilds I die Bewegungsvektoren auf Grund der Rotation um einen Rotationsanteil, während im unteren Teil die reinen Translationsvektoren sich um den Rotationsanteil verkürzen. Andererseits zeigen die resultierenden Bewegungsvektoren auf der x-Achse des Koordinatensystems einen Winkel zur x-Achse, da sie sich nunmehr aus einem in x-Richtung zeigenden Translationsanteil und aus einem in y-Richtung zeigenden Rotationsanteil zusammensetzen.

In gleicher Weise zeigt Figur 5 eine vereinfachte Darstellung eines Kamerabildes mit Bewegungsvektoren v einer Rotation, wobei jedoch eine Rotationsachse RA weit außerhalb der optischen Achse OA bzw. des Ursprungs des Koordinatensystems liegt. Bei einer derartigen Rotation ergeben sich wiederum Translationskomponenten in Verbindung mit Rotationskomponenten, die zu unterschiedlichen Längen und Richtungen der Bewegungsvektoren in Abhängigkeit von einer jeweiligen x-/y-Koordinate des Bewegungsvektors bzw. des zugehörigen Teilbildbereichs führen.

Erfolgt zusätzlich zu den bereits kombinierten Bewegungsvektoren gemäß den Figuren FIG 4 oder FIG 5 noch eine Zoombewegung gemäß Figur FIG 3, so ergeben sich daraus veränderte resultierende Bewegungsvektoren.

In Kenntnis dieser grundsätzlichen Bewegungsformen und unter der Annahme, dass die optische Achse mit dem Ursprung des orthogonalen x-/y-Koordinatensystems bzw. mit dem Mittelpunkt des Kamerabilds I zusammenfällt, können nunmehr die einzelnen Bewegungsanteile rückermittelt werden, wodurch sich auf eine Kamerabewegung bzw. auf eine Bewegung des aufgenommenen Objekts schließen lässt.

Zunächst werden zumindest zwei Bewegungsvektoren für Teilbildbereiche in zeitlich aufeinander folgenden Kamerabildern einer Bildfolge ermittelt. Ferner werden die den Bewegungsvektoren zugehörigen Bewegungsvektor-Ortskoordinaten erfasst, wobei der Ursprung eines Koordinatensystems mit der optischen Achse OA einer Kamera bzw. Aufnahmeeinheit zusammenfällt.

Auf der Grundlage der ermittelten Bewegungsvektoren und der zugehörigen ermittelten Bewegungsvektor-Ortskoordinaten können nunmehr die Bewegungsparameter wie z.B. eine x-Translation $T_x$ zur Quantifizierung einer Verschiebebewegung in x-Richtung, eine y-Translation $T_y$ zur Quantifizierung einer Verschiebebewegung in y-Richtung, eine Rotation θ zur Quantifizierung einer Drehbewegung und ein Zoomfaktor Z zur Quantifizierung einer Zoombewegung ermittelt werden.

FIG 6 zeigt eine vereinfachte Darstellung eines Kamerabilds mit zwei betrachteten Teilbildbereichen $P_1$ und $P_2$ sowie zugehörigen Bewegungsvektoren $v_1$ und $v_2$, sowie die zugehörigen Lösungsmatrizen zur Bestimmung der Bewegungsparameter $T_x$, $T_y$, θ und Z.

Gemäß Gleichungen 1 und 2 bestimmen sich die n Bewegungsvektoren bzw. deren Bewegungsvektoranteile $v_{xn}$ und $v_{yn}$ in x-Richtung und in y-Richtung als Bewegungsvektormatrix Y. Diese Bewegungsvektormatrix Y ergibt sich aus dem Matrix-Produkt der Bewegungsparametermatrix c, welche die Bewegungsparameter $T_x$ für die x-Translation, $T_y$ für die y-Translation, θ für die Rotation und Z für den Zoomfaktor aufweist, mit einer Matrix X. Die Matrix X stellt hierbei eine Matrix von n Zeilen und vier Spalten dar, die im wesentlichen die Auswirkungen einer Zoombewegung und einer Rotationsbewegung auf die Verschiebebewegung beschreibt.

Gemäß einem ersten Ausführungsbeispiel wird vereinfachend davon ausgegangen, dass lediglich zwei Teilbildbereiche zur Ermittlung von lediglich zwei Bewegungsvektoren in zeitlich aufeinander folgenden Kamerabildern einer Bildfolge betrachtet werden. Damit entfällt der untere Teil der Matrix X, wodurch sich die Matrixmultiplikation

$$X \quad c = Y$$

wie folgt vereinfacht:

$$v_{x1} = Zx_1 - \theta y_1 + T_x$$

$$v_{y1} = Zy_1 + \theta x_1 + T_y$$

$$V_{x2} = Zx_2 - \theta y_2 + T_x$$

$$V_{y2} = Zy_2 + \theta x_2 + T_y$$

Somit ergeben sich für jeden Bewegungsvektor zwei Gleichungen mit insgesamt vier Unbekannten, wodurch sich genau eine Lösung ergibt.

Für den Zoomf aktor Z ergibt sich:

$$Z = \frac{(x_2 - x_1) \times (v_{x2} - v_{x1}) + (y_2 - y_1) \times (v_{y2} - v_{y1})}{(x_2 - x_1)^2 + (y_2 - y_1)^2}$$

Für die Drehbewegung ergibt sich der Rotationswert $\theta$ zu:

$$\theta = \frac{(x_2 - x_1) \times (v_{y2} - v_{y1}) - (y_2 - y_1) \times (v_{x2} - v_{x1})}{(x_2 - x_1)^2 + (y_2 - y_1)^2}$$

Für sehr kleine $\theta$ gilt hierbei $\theta \cong \alpha$, wobei $\alpha$ den Rotationswinkel darstellt. Für große $\theta$ bzw. eine genaue Berechnung des Rotationswinkels $\alpha$ gilt:

$$\alpha = \tan^{-1}(\theta).$$

Die Translationskomponenten in x- bzw. y-Richtung ergeben sich zu:

$$T_x = v_{x1} - Zx_1 + \theta y_1$$

$$T_y = v_{y1} - Zy_1 - \theta x_1 .$$

In gleicher Weise können auch die $x_2$-Werte und die $y_2$-Werte zur Berechnung der x-Translation $T_x$ und der y-Translation $T_y$ verwendet werden.

Gemäß einem zweiten Ausführungsbeispiel ergibt sich eine weitere Vereinfachung der vorstehenden Lösungsmatrix dadurch, dass die Teilbildbereiche bzw. die zugehörigen Bewegungsvektoren punktsymmetrisch zum Ursprung des Koordinatensystems liegen bzw. ausgewählt werden - wie in FIG 6 dargestellt.

In diesem Falle gilt $x_1 = -x_2 = x$ und $y_1 = -y_2 = y$.

Dadurch vereinfachen sich die oben genannten Gleichungen zu:

$$Z = \frac{x(v_{x2} - v_{x1}) + y(v_{y2} - v_{y1})}{2(x^2 + y^2)}$$

$$\theta = \frac{x(v_{y2} - v_{y1}) - y(v_{x2} - v_{x1})}{2(x^2 + y^2)}$$

$$T_x = \frac{v_{x1} + v_{x2}}{2}$$

$$T_y = \frac{v_{y1} + v_{y2}}{2}$$

Eine weitere Vereinfachung ergibt sich dadurch, dass die betrachteten Punkte entweder auf der x-Achse oder auf der y-Achse liegen. Gemäß FIG 6 gilt für die x-Komponenten $x_1 = x_2 = 0$.
Daraus ergeben sich folgende vereinfachte Bewegungsparameter

$$Z = \frac{v_{y2} - v_{y1}}{2y}$$

$$\theta = \frac{v_{x1} - v_{x2}}{2y}$$

Obwohl sich bei einer derartigen Annahme das Verfahren sehr stark vereinfacht, werden mehr als zwei Bewegungsvektoren, bevorzugt vier Bewegungsvektoren, verwendet.

Grundsätzlich ist jedoch eine beliebige Anzahl n von Bewegungsvektoren zur Bestimmung der Bewegungsparameter verwendbar - wie nachfolgend anhand einer allgemeinen Betrachtung im Einzelnen beschrieben wird.

Falls mehr als zwei Bewegungsvektoren ermittelt werden, ergibt sich eine Überbestimmung der in FIG 6 dargestellten Gleichung 1 bzw. der daraus resultierenden Kurzform gemäß Gleichung 2. Zur eindeutigen Bestimmung der Bewegungsparameter werden so genannte "best fit"-Verfahren verwendet. Ein bevorzugtes Verfahren ist das so genannte "Least Squares Regression"-Verfahren, bei dem die Summe der Fehlerquadrate zwischen gemessenen und vorhergesehenen Werten minimiert werden. Grundsätzlich sind jedoch auch andere Fehlerminimierungsverfahren anwendbar.

Für den Fall von n Bewegungsvektoren $v_{xi}$, $v_{yi}$ mit den zugehörigen Bewegungsvektor-Ortskoordinaten $(x_i, y_i)$, mit i = 1 bis n, ergibt sich wiederum die in Gleichung 1 dargestellte Matrixgleichung, die verkürzt als Xc = Y dargestellt werden kann. Gemäß dem "Least Squares Regression"-Fehlerminimierungsverfahren wird diese Gleichung 1 mit der transponierten Matrix $X^T$ von X multipliziert, wodurch sich die Gleichung

$$X^T Xc = X^T Y$$

ergibt. Aufgelöst nach der Bewegungsparametermatrix c folgt:

$$c = (X^T X)^{-1} X^T Y.$$

Zur vereinfachten Darstellung werden die nachfolgenden Definitionen eingeführt. Dadurch ergibt sich in allgemeiner Schreibweise für die Bewegungsparametermatrix c die nachfolgende Lösungsgleichung:

$$
\begin{bmatrix} Z \\ \Theta \\ T_x \\ T_y \end{bmatrix} = \frac{1}{Det}
\begin{bmatrix} n & 0 & -S_x & -S_y \\ 0 & n & S_y & -S_x \\ -S_x & S_y & S_{xx}+S_{yy} & 0 \\ -S_y & -S_x & 0 & S_{xx}+S_{yy} \end{bmatrix}
\begin{bmatrix} S_x V_x + S_y V_y \\ S_x V_y + S_y V_x \\ S V_x \\ S V_y \end{bmatrix}
$$

mit

$$Det = n^2 (S_{xx}+S_{yy})^2 - (S_x^2 + S_y^2)^2$$

$$S_x = \sum_{i=1}^{n} x_i \; ; \; S_{xx} = \sum_{i=1}^{n} x_i \; ; \; S V_x = \sum_{i=1}^{n} V_{xi} \; ; \; S_x V_x = \sum_{i=1}^{n} x_i \cdot V_{xi} \; ;$$

$$S_y = \sum_{i=1}^{n} y_i \; ; \; S_{yy} = \sum_{i=1}^{n} y_i^2 \; ; \; S V_y = \sum_{i=1}^{n} V_{yi} \; ; \; S_y V_y = \sum_{i=1}^{n} y_i \cdot V_{yi} \; ;$$

$$S_y V_x = \sum_{i=1}^{n} y_i \cdot V_{xi} \; ; \; S_x V_y = \sum_{i=1}^{n} x_i \cdot V_{yi}$$

wobei
$x_i$, $y_i$ die Bewegungsvektor-Ortskoordinaten,
n die Anzahl der Bewegungsvektoren und
$v_{xi}$, $v_{yi}$ die Bewegungsvektoren in x-Richtung und in y-Richtung darstellen.

Dies ergibt unmittelbar die Werte für einen Zoomfaktor Z, eine Rotation θ, eine x-Translation $T_x$ und eine y-Translation $T_y$, wodurch eine Zoombewegung, eine Drehbewegung und eine Verschiebebewegung in x-Richtung und in y-Richtung größenmäßig angegeben werden kann.

Durch geeignete Auswahl der Bewegungsvektor-Ortskoordinaten kann diese Gleichung vereinfacht werden.

Liegen beispielsweise die Bewegungsvektor-Ortskoordinaten (x, y) achsensymmetrisch zur x- oder y-Achse des Koordinatensystems, so ergeben sich die Summenwerte der jeweiligen x- und y-Werte zu [0].

In gleicher Weise können die Bewegungsvektor-Ortskoordinaten bzw. die Teilbildbereiche derart ausgewählt werden, dass ein Mittelwert ihrer zugehörigen Bewegungsvektor-Ortskoordinaten wiederum den Wert [0,0] ergibt, wodurch auch andere Fälle als die vorstehend beschriebene Achsensymmetrie zur x- oder y-Achse eine entsprechende Vereinfachung erzielen.

In diesem Fall folgt für die x-Translation und für die y-Translation:

$$T_x = S_{vx}/n \text{ und } T_y = S_{vy}/n.$$

Für den Zoomfaktor Z und für die Rotation θ ergeben sich die Werte zu:

$$Z = \frac{S_{xvx} + S_{yvy}}{S_{xx} + S_{yy}}$$

$$\theta = \frac{S_{xvy} - S_{yvx}}{S_{xx} + S_{yy}}.$$

Diese Gleichungen zeigen ein bevorzugtes Ausführungsbeispiel zur Ermittlung einer Bewegung von Kamerabildern.

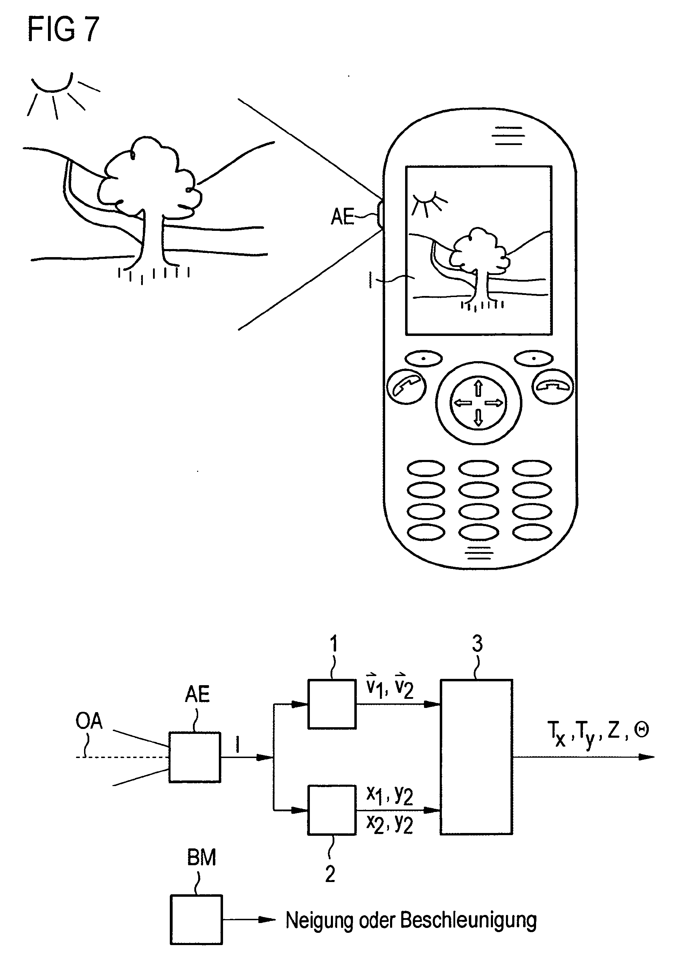

FIG 7 zeigt eine Vorrichtung zum Ermitteln einer Bewegung von Kamerabildern gemäß der vorliegenden Erfindung, wobei mit einer Aufnahmeeinheit AE, beispielsweise einer Kameraeinheit, eine Folge von Kamerabildern erzeugt werden.

Eine Bewegungsvektor-Ermittlungseinheit 1 ermittelt zumindest zwei Bewegungsvektoren für Teilbildbereiche in zeitlich aufeinander folgenden Kamerabildern, wobei eine Ortsermittlungseinheit 2 die den Bewegungsvektoren zugehörigen Bewegungsvektor-Ortskoordinaten ermittelt. Als Ursprung des Koordinatensystems wird ein Punkt verwendet, der auf der optischen Achse OA der Aufnahmeeinheit AE liegt.

Unter Verwendung der ermittelten Bewegungsvektoren $v_1$, $v_2$ und der zugehörigen ermittelten Bewegungsvektor-Ortskoordinaten x, y werden die Bewegungsparameter $T_x$, $T_y$, θ und Z durch eine Bewegungsparameter-Ermittlungseinheit 3 effizient und genau ermittelt. Die Bewegungsparameter-Ermittlungseinheit 3 führt insbesondere die vorstehend beschriebenen vereinfachten Matrixberechnungen durch.

Zusätzlich zeigt FIG 7 einen Beschleunigungsmesser BM, mit dessen Hilfe eine Kippbewegung oder die Beschleunigung der Aufnahmeeinheit AE bestimmt wird.

Die durchgeführte Kippbewegung, Drehbewegung (Rotation), Translationsbewegung und Zoombewegung der Kamera bzw. der Aufnahmeeinheit AE kann derart umgesetzt werden, dass ein virtuelles Objekt in Bezug zu einem Zielort gekippt, gedreht, in xy-Richtung mit gleichem Abstand zum Zielort verschoben oder in Richtung des Zielorts verschoben wird, wodurch eine Änderung der Lage bzw. der Position sowie der Ausrichtung des dreidimensionalen virtuellen Objekts erreicht wird.

**Patentansprüche**

**1.** Verfahren zur Positionsbestimmung einer Kamera,

- bei dem bei einer Kamerabewegung entweder Teilbildbereiche in zeitlich aufeinander folgenden Kamerabildern einer Bildfolge festgelegt werden, um zumindest zwei Bewegungsvektoren zu bestimmen, oder bei dem bei der Kamerabewegung eine Positionsänderung von vorgegebenen Markern bestimmt wird, wobei die Marker durch die zeitlich aufeinander folgenden Kamerabilder festgelegt sind,
- bei dem aus den zumindest zwei Bewegungsvektoren oder aus der Positionsänderung der Marker eine Zoombewegung und/oder eine Translationsbewegung und/oder eine Drehbewegung der Kamera ermittelt wird,
- bei dem eine Beschleunigung der Kamerabewegung gemessen wird,
- bei dem ausgehend von einem vorbestimmten Positions-Referenzpunkt die Zoombewegung und/oder die Translationsbewegung und/oder die Drehbewegung der Kamera unter Berücksichtigung der Beschleunigung in eine relative Positionsänderung der Kamera umgesetzt wird, um eine aktuelle, auf den Referenzpunkt bezogene Kameraposition zu bestimmen.

**2.** Verfahren nach Anspruch 1,

- bei dem aus der Beschleunigung der Kamera eine Kippbewegung der Kamera ermittelt wird, oder
- bei dem die Beschleunigung der Kamera bei einer Zoombewegung zur Bestimmung des Abstandes zwischen dem virtuellen Objekt einerseits und dem Zielort andererseits verwendet wird.

**3.** Verfahren nach Anspruch 1 oder 2,

- bei dem Bewegungsvektor-Ortskoordinaten ermittelt werden, die den Bewegungsvektoren zugeordnet sind, wobei als Ursprung des Koordinatensystems ein Punkt verwendet wird, der auf einer optischen Achse einer Aufnahmeeinheit liegt, die zum Erzeugen der Kamerabilder verwendet wird,
- bei dem Bewegungsparameter der Kamerabilder auf der Grundlage der Bewegungsvektoren und der zugehörigen ermittelten Bewegungsvektor-Ortskoordinaten bestimmt werden.

**4.** Verfahren nach Anspruch 3, bei dem die Bewegungsvektoren aus zwei Kamerabildern durch Bestimmung einer Abweichung einer Position eines unverschobenen Teilbildbereichs zu einer Position eines verschobenen Teilbildbereichs in einem zeitlich folgenden Kamerabild ermittelt werden.

**5.** Verfahren nach Anspruch 3, bei dem als Bewegungsparameter eine x-Translation zur Quantifizierung einer Verschiebungsbewegung in x-Richtung, eine y-Translation zur Quantifizierung einer Verschiebungsbewegung in y-Richtung, eine Rotation zur Quantifizierung einer Drehbewegung und einen Zoomfaktor zur Quantifizierung einer Zoombewegung ermittelt werden.

**6.** Verfahren nach einem Ansprüche 3 bis 5, bei dem zur Ermittlung der Bewegungsvektoren Teilbildbereiche verwendet werden, die punktsymmetrisch zum Koordinatensystem-Ursprung liegen.

**7.** Verfahren nach einem der Ansprüche 3 bis 6, bei dem zur Ermittlung der Bewegungsvektoren Teilbildbereiche verwendet werden, die achsensymmetrisch zur x-Achse oder zur y-Achse des Koordinatensystems liegen.

**8.** Verfahren nach einem der Ansprüche 3 bis 7, bei dem zur Ermittlung der Bewegungsvektoren Teilbildbereiche derart ausgewählt werden, dass ein Mittelwert ihrer zugehörigen Bewegungsvektor-Ortskoordinaten den Wert [0, 0] aufweist.

**9.** Verfahren nach einem der Ansprüche 3 bis 8, bei dem die Bewegungsparameter mit der Gleichung

$$
\begin{bmatrix} Z \\ \Theta \\ T_x \\ T_y \end{bmatrix} = \frac{1}{Det} \begin{bmatrix} n & 0 & -S_x & -S_y \\ 0 & n & S_y & -S_x \\ -S_x & S_y & S_{xx}+S_{yy} & 0 \\ -S_y & -S_x & 0 & S_{xx}+S_{yy} \end{bmatrix} \begin{bmatrix} S_xV_x+S_yV_y \\ S_xV_y+S_yV_x \\ SV_x \\ SV_y \end{bmatrix}
$$

mit

$$
Det = n^2(S_{xx}+S_{yy})^2-(S_x^2+S_y^2)^2
$$

$$
S_x = \sum_{i=1}^{n} x_i \;\; ; \;\; S_{xx}=\sum_{i=1}^{n} x_i \;\; ; \;\; SV_x = \sum_{i=1}^{n} V_{x_i} \;\; ; \;\; S_xV_x=\sum_{i=1}^{n} x_i \cdot V_{x_i} ;
$$

$$
S_y = \sum_{i=1}^{n} y_i \;\; ; \;\; S_{yy}=\sum_{i=1}^{n} y_i^2 \;\; ; \;\; SV_y = \sum_{i=1}^{n} V_{yi} \;\; ; \;\; S_yV_y=\sum_{i=1}^{n} y_i \cdot V_{yi} ;
$$

$$
S_yV_x = \sum_{i=1}^{n} y_i \cdot V_{x_i} \;\; ; \;\; S_xV_y=\sum_{i=1}^{n} x_i \cdot V_{yi}
$$

ermittelt werden, wobei

$x_i$, $y_i$ die Bewegungsvektor-Ortskoordinaten,
n die Anzahl der Bewegunsvektoren, und
$v_{xi}$, $v_{yi}$ die Bewegungsvektoren in x-Richtung und in y-Richtung darstellen.

10. Vorrichtung mit einer Aufnahmeeinheit zum Erzeugen einer Bildfolge von Kamerabildern und mit Mitteln, die zur Durchführung des Verfahrens nach einem der Ansprüche 1 bis 9 ausgebildet sind.

## FIG 3

$\vec{v}$

OA

Zoom (Z)

## FIG 2

$\vec{v}$

OA

Rotation (Θ)

## FIG 1

$\vec{v}$

x

y

OA

$\vec{T}$

$T_y$

$T_x$

Translation $(T_x, y^T)$

FIG 4

$\vec{v}$

OA=RA

Rotation+Translation
(OA=RA)

FIG 5

$\vec{v}$

×—OA

Rotation
(OA≠RA)

RA

## FIG 6

$$
\begin{bmatrix}
x_1 & -y_1 & 1 & 0 \\
y_1 & x_1 & 0 & 1 \\
x_2 & -y_2 & 1 & 0 \\
y_2 & x_2 & 0 & 1 \\
& \vdots & & \\
x_n & -y_n & 1 & 0 \\
y_n & x_n & 0 & 1
\end{bmatrix}
\begin{bmatrix}
Z \\
\Theta \\
T_x \\
T_y
\end{bmatrix}
=
\begin{bmatrix}
V_{x_1} \\
V_{y_1} \\
V_{x_2} \\
V_{y_2} \\
\vdots \\
V_{x_n} \\
V_{y_n}
\end{bmatrix}
\tag{1}
$$

$$
\underset{X}{\|} \qquad \underset{c}{\|} = \underset{Y}{\|} \tag{2}
$$

$$
\begin{bmatrix}
Z \\
\Theta \\
T_x \\
T_y
\end{bmatrix}
= \frac{1}{Det}
\begin{bmatrix}
n & 0 & -S_x & -S_y \\
0 & n & S_y & -S_x \\
-S_x & S_y & S_{xx}+S_{yy} & 0 \\
-S_y & -S_x & 0 & S_{xx}+S_{yy}
\end{bmatrix}
\begin{bmatrix}
S_xV_x + S_yV_y \\
S_xV_y + S_yV_x \\
SV_x \\
SV_y
\end{bmatrix}
\tag{3}
$$

$$
Det = n^2(S_{xx}+S_{yy})^2 - (S_x^2+S_y^2)^2
$$

$$
S_x = \sum_{i=1}^{n} x_i \;;\; S_{xx} = \sum_{i=1}^{n} x_i \;;\; SV_x = \sum_{i=1}^{n} V_{x_i} \;;\; S_xV_x = \sum_{i=1}^{n} x_i \cdot V_{x_i} \;;
$$

$$
S_y = \sum_{i=1}^{n} y_i \;;\; S_{yy} = \sum_{i=1}^{n} y_i^2 \;;\; SV_y = \sum_{i=1}^{n} V_{yi} \;;\; S_yV_y = \sum_{i=1}^{n} y_i \cdot V_{y_i} \;;
$$

$$
S_yV_x = \sum_{i=1}^{n} y_i \cdot V_{x_i} \;;\; S_xV_y = \sum_{i=1}^{n} x_i \cdot V_{y_i}
$$

FIG 7

OA — AE — I

$\vec{v}_1, \vec{v}_2$

1

3

$x_1, y_2$
$x_2, y_2$

2

$T_x, T_y, Z, \Theta$

BM

Neigung oder Beschleunigung

**Europäisches Patentamt**

# EUROPÄISCHER RECHERCHENBERICHT

Nummer der Anmeldung

EP 04 01 8276

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | YOU S ET AL INSTITUTE OF ELECTRICAL AND ELECTRONICS ENGINEERS: "HYBRID INERTIAL AND VISION TRACKING FOR AUGMENTED REALITY REGISTRATION" PROCEEDINGS IEEE 1999 VIRTUAL REALITY. HOUSTON, TX, MARCH 13 - 17, 1999, PROCEEDINGS IEEE VIRTUAL REALITY.(VR), NEW YORK, NY : IEEE, US, 13. März 1999 (1999-03-13), Seiten 260-267, XP000887668 ISBN: 0-7803-5559-9 | 1-5,10 | G06T7/20 |
| Y | * Zusammenfassung; Abbildung 2; Tabelle 1 * <br><br> * Seite 262, rechte Spalte, Absatz 2 - Seite 265, linke Spalte, Absatz 1 * <br> ----- | 9 | |
| X | VIEVILLE THIERRY: "A few steps towards 3D active vision" 1997, SPRINGER-VERLAG , BERLIN HEIDELBERG NEW YORK, ISBN 3-540-63106-2, PAGES 108-110 , XP002306146 * Abschnitte 4.5.3-4.5.5 * <br> ----- | 1,2,10 | |
| | | | **RECHERCHIERTE SACHGEBIETE (Int.Cl.7)** |
| Y | CHEN X C ET AL: "Lossy adaptive coding of motion vectors with global camera motion compensation" SIGNALS, SYSTEMS AND COMPUTERS, 1996. CONFERENCE RECORD OF THE THIRTIETH ASILOMAR CONFERENCE ON PACIFIC GROVE, CA, USA 3-6 NOV. 1996, LOS ALAMITOS, CA, USA,IEEE COMPUT. SOC, US, 3. November 1996 (1996-11-03), Seiten 105-108, XP010231402 ISBN: 0-8186-7646-9 * Abschnitt 2.1 * <br> ----- <br><br> -/-- | 9 | G06T H04N |

Der vorliegende Recherchenbericht wurde für alle Patentansprüche erstellt

| Recherchenort | Abschlußdatum der Recherche | Prüfer |
|---|---|---|
| München | 17. November 2004 | Borotschnig, H |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.................................................................

& : Mitglied der gleichen Patentfamilie, übereinstimmendes Dokument

EPO FORM 1503 03.82 (P04C03)

**Europäisches**
**Patentamt**

**EUROPÄISCHER RECHERCHENBERICHT**

Nummer der Anmeldung

EP 04 01 8276

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | RABINDRANATH DUTTA: "DEPTH FROM MOTION AND STEREO: PARALLEL AND SEQUENTIAL ALGORITHMS, ROBUSTNESS AND LOWER BOUNDS" September 1994 (1994-09), UNIVERSITY OF MASSACHUSETTS AMHERST, DEPARTMENT OF COMPUTER SCIENCE , MASSACHUSETTS AMHERST USA, DISSERTATION THESIS, PAGES 12-17 , XP002306147 * Seite 13, Zeile 1 - Seite 17, Zeile 4; Abbildungen 1.6,1.7 * | 1-10 | |
| A | SRINIVASAN M V ET AL: "Qualitative estimation of camera motion parameters from video sequences" PATTERN RECOGNITION, ELSEVIER, KIDLINGTON, GB, Bd. 30, Nr. 4, 1. April 1997 (1997-04-01), Seiten 593-606, XP004059156 ISSN: 0031-3203 * Abschnitt 3 * | 1-10 | |
| A | US 6 424 843 B1 (TAPPURA KIRSI ET AL) 23. Juli 2002 (2002-07-23) * Zusammenfassung; Ansprüche 11,17; Abbildungen 10,11 * * Spalte 7, Zeile 52 - Spalte 10, Zeile 4 * * Spalte 12, Zeile 12 - Zeile 37 * | 1-10 | **RECHERCHIERTE SACHGEBIETE (Int.Cl.7)** |

Der vorliegende Recherchenbericht wurde für alle Patentansprüche erstellt

| Recherchenort | Abschlußdatum der Recherche | Prüfer |
|---|---|---|
| München | 17. November 2004 | Borotschnig, H |

EPO FORM 1503 03.82 (P04C03)

**EP 1 624 414 A1**

**ANHANG ZUM EUROPÄISCHEN RECHERCHENBERICHT**
**ÜBER DIE EUROPÄISCHE PATENTANMELDUNG NR.**

EP 04 01 8276

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-11-2004

| Im Recherchenbericht angeführtes Patentdokument | | Datum der Veröffentlichung | Mitglied(er) der Patentfamilie | | Datum der Veröffentlichung |
|---|---|---|---|---|---|
| US 6424843 | B1 | 23-07-2002 | FI | 971708 A | 23-10-1998 |
| | | | AU | 7046798 A | 13-11-1998 |
| | | | EP | 0985306 A2 | 15-03-2000 |
| | | | WO | 9848548 A2 | 29-10-1998 |
| | | | JP | 2002508893 T | 19-03-2002 |

Für nähere Einzelheiten zu diesem Anhang : siehe Amtsblatt des Europäischen Patentamts, Nr.12/82